# EUROPÄISCHE PATENTANMELDUNG

(11) **EP 2 540 540 A1**
(43) Veröffentlichungstag der Anmeldung: **02.01.2013**
(21) Anmeldenummer: 11290305.9
(22) Anmeldetag: 01.07.2011
(51) Int. Cl.: B60H 1/22, F24H 3/04, F24H 9/18, F28F 9/00

(54) **Heizkörper mit integrierter elektrischer Zusatzheizung**

(71) Anmelder: Behr France Rouffach SAS, 68250 Rouffach (FR)
(72) Erfinder: Brun, Michel, 68740 Rustenhart (FR); Schmittheisler, Christophe, 67680 Epfig (FR); Miss, Pascal, 67600 Sélestat (FR); Lucas, Grégory, 68700 Wattwiller (FR); Mougey, Mathieu, 68170 Rixheim (FR)
(74) Vertreter: Grauel, Andreas

(57) **Zusammenfassung**

Die Erfindung betrifft einen Heizkörper für Kraftfahrzeuge mit integrierter elektrischer Zusatzheizung, wobei der Heizkörper (1) ein aus Rohren (3) und Rippen (4) bestehendes Netz (2) mit Stirnflächen für den Lufteintritt und für den Luftaustritt (10) und die Zusatzheizung (11) Heizelemente (12) aufweist, die in wärmeleitender Verbindung mit den Rippen (4) stehen, auf einer Stirnfläche, insbesondere auf der Stirnfläche (10) für den Luftaustritt angeordnet und durch elektrisch leitende Gitter (15.1, 15.2, 15.3) am Netz (2) befestigt sind.

Es wird vorgeschlagen, dass zwischen den Heizelementen (12) und den Wellrippen (4) elektrisch und thermisch leitende Kontaktstücke (17) angeordnet sind.

## Beschreibung

Die Erfindung betrifft einen Heizkörper für Kraftfahrzeuge mit integrierter elektrischer Zusatzheizung nach dem Gegenstand der älteren europäischen Patentanmeldung Nr. 03 290 620.8 der Anmelderin.

In der älteren Anmeldung der Anmelderin (internes Aktenzeichen: 02-BF-16) ist ein Heizkörper für eine Kraftfahrzeugheizung mit integrierter elektrischer Zusatzheizung offenbart, wobei die Zusatzheizung Heizelemente, vorzugsweise PTC-Elemente aufweist, die in wärmeleitender Verbindung mit den Rippen stehen, auf einer Stirnfläche, insbesondere der Luftaustrittsfläche des Heizkörper angeordnet und durch ein elektrisch leitendes Gitter am Netz des Heizkörpers befestigt sind. Das elektrisch leitende Gitter wirkt als Kontaktgitter für die einzelnen PTC-Elemente, die über das Kontaktgitter bestromt und somit beheizt werden. Die Heizwärme wird über einen mechanischen Kontakt in die Rippen des Heizkörpers eingeleitet und von diesen auf die den Heizkörper durchströmende Luft übertragen. Insofern gibt diese PTC-Zusatzheizung ihre Wärme direkt an die Luft und nicht an ein die Rohre des Heizkörpers durchströmendes Kühlmittel ab. Dadurch ergibt sich eine dynamische, d. h. schnell ansprechende Zusatzheizung. Da das Gitter mit den Heizelementen und der Heizkörper eine Baueinheit bilden, spricht man von einer integrierten Zusatzheizung. Die in der älteren Anmeldung offenbarte Zusatzheizung weist allerdings noch Potenziale hinsichtlich der Heizleistung auf, insbesondere im Hinblick auf den Wärmeübergang zwischen Heizelement und Rippen des Heizkörpers.

Es ist Aufgabe der vorliegenden Erfindung, eine Verbesserung der Leistung der elektrischen Zusatzheizung, auch im Hinblick auf eine verbesserte Dynamik zu erreichen.

Diese Aufgabe wird durch die Merkmale des Patenanspruches 1 gelöst. Erfindungsgemäß ist zwischen den PTC-Heizelementen und den Rippen des Heizkörpers ein Kontaktstück vorgesehen, welches primär den thermischen Kontakt und auch sekundär den elektrischen Kontakt verbessert. Vorteilhafterweise ist dieses Kontaktstück als T-Profil ausgebildet, welches einerseits mit seinem "T-Balken" an der Fläche der PTC-Elemente anliegt und mit seinem Steg die Rippen des Heizkörpernetzes kontaktiert. Dadurch wird vor allem eine verbesserte Wärmeleitung von den Heizelementen auf die Rippen und damit auf die Luft erreicht. Die Heizleistung wird damit verbessert.

In vorteilhafter Ausgestaltung der Erfindung besteht das Heizkörpernetz aus einem gelöteten Block von Flachrohren und Wellrippen, die über die Flachrohre hinausstehen und Schlitze bilden, in welche die T-Profile mit ihren Stegen eingreifen. Dadurch wird der Vorteil erreicht, dass der thermische Kontakt zwischen den Heizelementen und den Wellrippen verbessert und die Wärmeübertragung an die Luft erhöht wird. Damit ergibt sich ein verbesserter Wirkungsgrad für die Leistung der Zusatzheizung. Auch die Dynamik, d. h. das Ansprechverhalten wird verbessert, da die Luft über die Rippen schneller erwärmt wird.

In vorteilhafter Ausgestaltung der Erfindung kann die Verbindung zwischen den T-Profilen und den Rippen unterschiedliche ausgebildet sein, wobei eine Verlötung eines T-Profiles aus Aluminium mit den Aluminiumwellrippen besonders vorteilhaft ist, weil hierdurch der maximale Wärmeübergang erzielt wird. Die Verlötung der T-Profile kann bereits mit der Verlötung des Heizkörpernetzes erfolgen. Die PTC-Elemente werden anschließend zusammen mit dem Gitter auf die T-Profile aufgeklebt, und zwar mit einem elektrisch und thermisch leitenden Kleber.

In vorteilhafter Ausgestaltung der Erfindung soll zwischen den Stegen der T-Profile und den Flachrohren ein Abstand, d. h. ein Luftspalt bestehen bleiben, damit die von den PTC-Elementen erzeugte Wärme ausschließlich in die Rippen und nicht auch in die Flachrohre, d. h. in das sie durchströmende Kühlmittel fließt. Dies würde die Dynamik der Zusatzheizung negativ beeinflussen. Ein isolierender Spalt dagegen fördert die Dynamik der Zusatzheizung.

In weiterer vorteilhafter Ausgestaltung der Erfindung ist zwischen dem Gitter und dem Netz bzw. der Stirnfläche des Netzes ein Isolierrahmen angeordnet. Daraus ergibt sich der Vorteil, dass ein Kurzschluss zwischen Gitter und Netz vermieden wird und der Strom ausschließlich über die PTC-Elemente in das Netz und damit an Masse abfließt. Das Kontaktgitter bildet somit den Pluspol.

In weiterer vorteilhafter Ausgestaltung der Erfindung ist das Gitter in einzelne Zonen unterteilt, die separat und unabhängig voneinander beheizbar sind. Damit lässt sich eine Abstufung in der Heizleistung erreichen. Darüber hinaus ist es vorteilhaft, innerhalb einer Heizzone eines oder mehrere der PTC-Elemente durch so genannte Isolier-Elemente zu ersetzen, welche ungefähr die gleiche Keramikmasse wie die PTC-Elemente aufweisen, jedoch nicht heizen. Dadurch kann eine weitere Anpassung der Heizleistung erreicht werden.

Ein Ausführungsbeispiel der Erfindung ist in der Zeichnung dargestellt und wird im Folgenden näher beschrieben. Es zeigen
- Fig. 1: eine Ansicht eines Heizkörpers mit elektrischer Zusatzheizung,
- Fig. 2: einen Schnitt entlang der Linie II-II in Fig. 1 und
- Fig. 3: eine Explosivdarstellung der einzelnen Elemente der elektrischen Zusatzheizung mit Elementen des Heizkörpers.

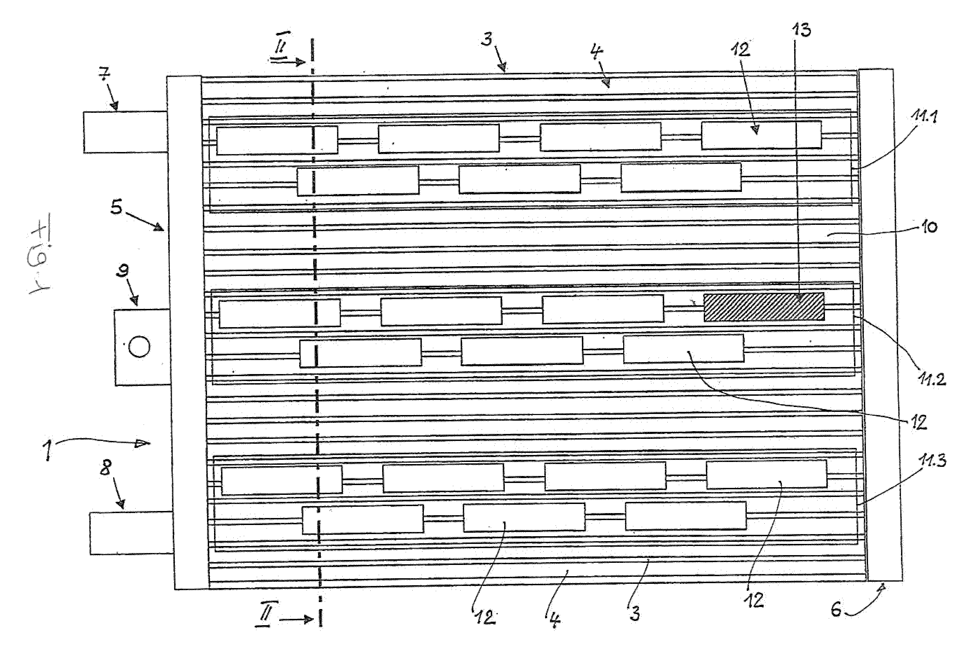

**Fig.** 1 zeigt eine Ansicht auf die Luftaustrittsseite eines gelöteten Heizkörpers 1 einer Kraftfahrzeug-Heizungs- bzw. ―Klimaanlage mit einer elektrischen Zusatzheizung ― wie bereits in der älteren eingangs genannten europäischen Patentanmeldung Nr. 03 290 620.8 der Anmelderin beschrieben; diese ältere Patentanmeldung wird in vollem Umfang in den Offenbarungsgehalt dieser Anmeldung einbezogen. Der Heizkörper 1 weist ein gelötetes Netz 2 auf, welches aus Flachrohren 3 und zwischen diesen angeordneten Wellrippen 4 besteht. Die Enden der Flachrohre 3 münden in Sammelkästen 5, 6, wobei der Sammelkasten 5 einen Rohreintrittsstutzen 7 und einen Rohraustrittsstutzen 8 für den Anschluss des Heizkörpers 1 an einen nicht dargestellten Kühlmittelkreislauf des Kraftfahrzeuges aufweist. Der Heizkörper 1 wird somit in der Heizphase von warmem Kühlmittel durchströmt, wobei die Wärme über die Wellrippen 4 an Umgebungsluft abgegeben wird, welche mittels eines nicht dargestellten Gebläses in den Fahrgastraum des Kraftfahrzeuges gefördert wird. Der Sammelkasten 5, der ebenso wie die Flachrohre 3 und die Wellrippen 4 aus einer Aluminiumlegierung besteht, ist mit einem Masseanschluss 9 (Minuspol) versehen. Die Luftaustrittsseite des Heizkörpers 1 ist mit der Bezugszahl 10 versehen. Auf der Luftaustrittsseite 10 sind drei Heizzonen 11.1, 11.2, 11.3 angeordnet, welche zusammen eine elektrische Zusatzheizung 11 bilden. Jede Heizzone 11.1, 11.2, 11.3 weist eine Vielzahl von rechteckförmig ausgebildeten Heizelementen 12 auf, die als PTC-Elemente ausgebildet sind. Die mittlere Heizzone 11.2 weist anstelle eines Heizelementes 12 ein schraffiert dargestelltes Isolierelement 13 auf, welches nicht beheizbar ist, sondern nur isolierend wirkt. Damit wird die Heizleistung der Heizzone 11.2 um den Anteil eines Heizelementes 12 reduziert, d. h. nach unten abgestuft.

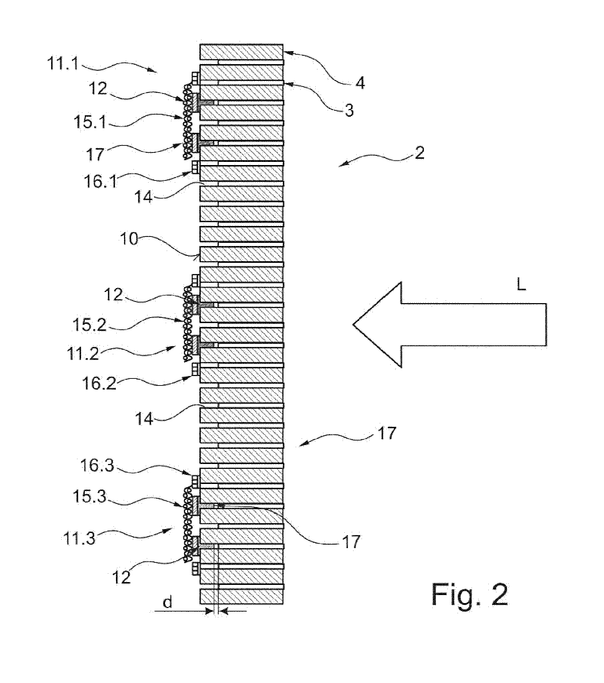

**Fig. 2** zeigt einen Schnitt in der Ebene II-II in Fig. 1, d. h. durch das Netz 2 des Heizkörpers 1, welches aus den Flachrohren 3 und den Wellrippen 4 besteht, wobei die Luftströmungsrichtung durch einen Pfeil L dargestellt ist. Die Wellrippen 4 überragen die Flachrohre 3 in Luftströmungsrichtung und bilden somit auf der Luftaustrittsseite 10 zwischen sich Schlitze 14. Auf der Luftaustrittseite 10 sind die drei Heizzonen 11.1, 11.2, 11.3 angeordnet, welche jeweils aus einem Kontaktgitter 15.1, 15.2, 15.3, PTC-Elementen 12 sowie jeweils einem Isolierrahmen 16.1, 16.2, 16.3 bestehen. Zwischen den PTC-Elementen 12 und den Wellrippen 4 sind T-Profile 17 angeordnet, die einerseits in Kontakt mit den PTC-Elementen 12 und andererseits mit den Wellrippen 4 stehen. Die T-Profile 17 sind aus einem Metall hergestellt, welches sowohl elektrisch als auch thermisch leitend ist. Vorzugsweise sind die T-Profile aus Aluminium hergestellt und mit den Wellrippen 4 verlötet, wodurch sich ein hervorragender thermischer Schluss und auch eine gute elektrische Leitfähigkeit ergeben. Zwischen den Flachrohren 3 und dem T-Profil 17 ist ein Abstand d, d. h. ein Luftspalt vorgesehen, der eine thermische Isolierung bewirkt und verhindert, dass Wärme vom PTC-Element 12 auf die Flachrohre 3 und damit in das Kühlmittel übertragen wird. Die in den PTC-Elementen 12 entstehende Wärme wird somit zunächst vollflächig in die T-Profile 17 eingeleitet und dann von den T-Profilen durch Kontaktflächen in die Wellrippen 4 weitergeleitet. Damit fließt mehr Wärme von den PTC-Elementen 12 in die Wellrippen 4, d. h. es gelangt auch mehr Wärme an die die Wellrippen 4 überströmende Luft. Die Leistung und die Dynamik der elektrischen Zusatzheizung 11 werden damit erhöht.

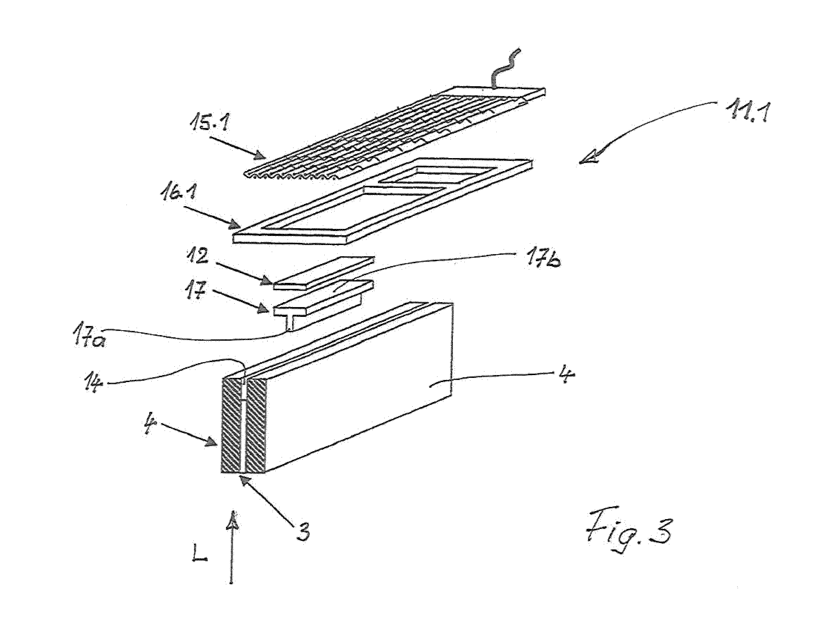

**Fig. 3** zeigt eine Explosivdarstellung einzelner Elemente der PTC-Zusatzheizung 11 und des Heizkörpers 1. Die Heizzone 11.1 besteht aus dem äußeren Drahtgitter 15.1, dem Isolierrahmen 16.1, den PTC-Elementen 12 und dem T-Profil 17. Der Heizkörper ist hier lediglich durch ein Flachrohr 3 und zwei Wellrippen 4 dargestellt, welche das Flachrohr 3 in Luftströmungsrichtung L überragen und somit den Spalt 14 bilden. Das T-Profil 17 weist einen Steg 17a auf, welcher in den Spalt 14 eingesetzt wird. Ferner weist das T-Profil 17 einen T-Balken oder einen Gurt 17b auf, welcher in seiner Abmessung den Abmessungen des PTC-Elementes 12 entspricht. Die vom PTC-Element 12 erzeugte Wärme wird daher zunächst vollflächig in den Gurt 17b eingeleitet und von dort über dessen Unterseite und den Steg 17a an die Wellrippen 4 abgegeben. Damit ist eine gute Wärmeleitung zwischen PTC-Element 12 und Wellrippen 4 gewährleistet.

## Patentansprüche

1. Heizkörper für Kraftfahrzeuge mit integrierter elektrischer Zusatzheizung, wobei der Heizkörper (1) ein aus Rohren (3) und Rippen (4) bestehendes Netz (2) mit Stirnflächen für den Lufteintritt und für den Luftaustritt (10) und die Zusatzheizung (11) Heizelemente (12) aufweist, die in wärmeleitender Verbindung mit den Rippen (4) stehen, auf einer Stirnfläche, insbesondere auf der Stirnfläche (10) für den Luftaustritt angeordnet und durch elektrisch leitende Gitter (15.1, 15.2, 15.3) am Netz (2) befestigt sind, wobei zwischen den Heizelementen (12) und den Rippen (4) elektrisch und thermisch leitende Kontaktstücke (17) angeordnet sind.

2. Heizkörper nach Anspruch 1, **dadurch gekennzeichnet, dass** die Kontaktstücke als T-Profile (17), vorzugsweise aus Metall ausgebildet sind.

3. Heizkörper nach Anspruch 1 oder 2, **dadurch gekennzeichnet, dass** das Netz (2) gelötet ist und Flachrohre (3) sowie Wellrippen (4) aufweist.

4. Heizkörper nach Anspruch 2 und 3, **dadurch gekennzeichnet, dass** die Wellrippen (4) in Luftströmungsrichtung L über die Flachrohre (3) hinaus stehen und Schlitze (14) bilden, und dass die T-Profile (17) Stege (17a) aufweisen, die in die Schlitze (14) eingreifen.

5. Heizkörper nach Anspruch 4, **dadurch gekennzeichnet, dass** die Wellrippen (4) und die T-Profile (17) aus einer Aluminiumlegierung hergestellt und miteinander verlötet sind.

6. Heizkörper nach Anspruch 4 oder 5, **dadurch gekennzeichnet, dass** zwischen den Stegen (17a) und den Flachrohren (3) ein Spalt d belassen ist, wobei vorzugsweise gilt: 1 ≤ d ≤ 3 mm.

7. Heizkörper nach Anspruch 4 oder 5, **dadurch gekennzeichnet, dass** die Heizelemente (12), vorzugsweise PTC-Elemente mit den T-Profilen (17) verklebt oder verlötet sind.

8. Heizkörper nach einem der Ansprüche 1 bis 7, **dadurch gekennzeichnet, dass** die Gitter als Drahtgitter (15.1, 15.2, 15.3) ausgebildet sind.

9. Heizkörper nach Anspruch 8, **dadurch gekennzeichnet, dass** die Drähte aus Aluminium, Messing oder Kupfer bestehen.

10. Heizkörper nach einem der Ansprüche 1 bis 9, **dadurch gekennzeichnet, dass** zwischen den Gittern (15.1, 15.2, 15.3) und der Stirnfläche (10) jeweils ein Isolierrahmen (16.1, 16.2, 16.3) angeordnet ist.

11. Heizkörper nach Anspruch 10, **dadurch gekennzeichnet, dass** der Isolierrahmen (16.1) aus einem elektrisch isolierenden Werkstoff, insbesondere Kunststoff, vorzugsweise einem Polyamid besteht.

12. Heizkörper nach einem der Ansprüche 1 bis 11, **dadurch gekennzeichnet, dass** die Zusatzheizung (11) in Zonen (11.1, 11.2, 11.3) aufgeteilt ist und die Zonen eine Vielzahl von Heizelementen (12) aufweisen.

13. Heizkörper nach Anspruch 12, **dadurch gekennzeichnet, dass** einzelne Heizelemente (12) durch Isolierungselemente (13) ersetzt sind.
